Europäisches Patentamt

European Patent Office

Office européen des brevets

(19)

(11) **EP 1 159 461 B1**

(12) **EUROPEAN PATENT SPECIFICATION**

(45) Date of publication and mention
of the grant of the patent:
**25.06.2003 Bulletin 2003/26**

(21) Application number: **00913778.7**

(22) Date of filing: **08.03.2000**

(51) Int Cl.[7]: **C22B 23/06**, C22B 3/00

(86) International application number:
**PCT/US00/05913**

(87) International publication number:
**WO 00/053820 (14.09.2000 Gazette 2000/37)**

(54) **RECOVERY OF NICKEL AND COBALT FROM ORE**

GEWINNUNG VON NICKEL UND KOBALT AUS ERZMATERIALIEN

RECUPERATION DE NICKEL ET DE COBALT A PARTIR DE MINERAIS

(84) Designated Contracting States:
**AT BE CH CY DE DK ES FI FR GB GR IE IT LI LU
MC NL PT SE**

(30) Priority: **09.03.1999 US 265279**

(43) Date of publication of application:
**05.12.2001 Bulletin 2001/49**

(73) Proprietor: **BHP MINERALS INTERNATIONAL
INC.
Reno, NV 89502 (US)**

(72) Inventors:
 • **DUYVESTEYN, Willem, P., C.
   Reno, NV 89511 (US)**
 • **NEUDORF, David, A.
   Reno, NV 89509 (US)**
 • **WEENINK, Erik, M.
   Sparks, NV 89434 (US)**
 • **HANSON, James, S.
   Reno, NV 89509 (US)**

(74) Representative:
**Baverstock, Michael George Douglas et al
BOULT WADE TENNANT,
Verulam Gardens
70 Gray's Inn Road
London WC1X 8BT (GB)**

(56) References cited:
| | |
|---|---|
| **WO-A-96/20291** | **FR-A- 2 462 924** |
| **US-A- 3 884 681** | **US-A- 4 382 016** |
| **US-A- 5 447 552** | **US-A- 5 626 648** |

EP 1 159 461 B1

**Description**

The present invention relates to the hydrometallurgical processing of nickeliferous ores and, in particular, to the recovery of pure nickel and cobalt solutions by a combination of solid-liquid and liquid-liquid extraction from leach solutions such as those derived from the acid leaching of nickeliferous ores.

## BACKGROUND OF THE INVENTION

Pure nickel metal can be recovered by electrolysis of aqueous solutions of nickel salts, such as nickel chloride and/or nickel sulfate. In order to produce pure nickel metal, of at least 99.8 % purity, it is necessary to keep most transition metal impurities, e.g., copper, iron, manganese, and cobalt, at extremely low levels in the nickel electrolyte. In addition, other impurities, e.g., chromium, iron, aluminum and calcium, can cause significant deterioration of the physical properties of the nickel metal cathodes, rendering a nickel electrowinning process impractical. Thus, in commercial practice, it is usually necessary to use extremely pure nickel electrolyte. Other nickel processes, e.g. hydrogen reduction of nickel solution to form nickel powder, also require pure solutions.

Cobalt occurs in association with nickel in most of its ores, both laterite or oxide ores, and sulfide ores. The so-called limonitic ores (high iron oxide and hydroxide content, low magnesium silicates content) in particular often contain cobalt at $\geq 1/20^{th}$ the nickel concentration. In certain ores, the cobalt content can even exceed the nickel content, which makes these ores more amenable to cobalt recovery only. This will still require the removal of nickel for the production of pure cobalt metal. Table 1 shows typical compositions for various sulfide and oxide ores and concentrates:

Table 1:

| Typical composition for various sulfide and oxide ores and concentrates | | | | |
|---|---|---|---|---|
| Sample | Ni (%) | Co (%) | Fe (%) | Mg (%) |
| Sulfide ore A | 0.5 | 0.02 | 5 | 25 |
| Sulfide ore B | 1.4 | 0.1 | 35 | |
| Sulfide concentrate A | 9 | 0.3 | 17 | |
| Sulfide concentrate C | 3 | 0.1 | 14 | 15 |
| Sulfide concentrate D | 10 | 0.2 | 25 | 8 |
| Sulfide concentrate E | 12 | 0.3 | 30 | 6 |
| Limonite 1 | 1.6 - 1.9 | 0.15 - 0.2 | 15 - 18 | |
| Limonite 2 | 1.4 | 0.3 | 43 | 1 |
| Limonite 3 | 0.9 | 0.05 | 29 | 4 |
| Limonite 4 | 0.7 | 0.02 | 35 | 0.4 |
| Saprolite 5 | 2.5 - 2.9 | 0.05 - 0.1 | 14 - 15 | 12 - 18 |
| Saprolite 6 | 2.0 | 0.07 | 21 | 11 |
| Saprolite 7 | 2.4 | 0.06 - 0.09 | 13 - 16 | 15 |
| Limonite, typical | 0.8 - 1.8 | 0.05 - 0.2 | 30 - 50 | 0 - 10 |
| Saprolite, typical | 1.8 - 3.5 | 0.01 - 0.05 | 10 - 30 | 10 - 25 |
| Oxide ore I | 0.02 - 0.1 | 0.3 - 1.0 | 2 - 5 | |

Production of nickel that meets the London Metal Exchange contract specifications (Class I nickel), requires that the cobalt content of the nickel be less than 0.15%. This corresponds to a nickel to cobalt ratio of about 665, which is at least 33 times larger than the ratio in the limonitic ore. Successful nickel processing therefore requires an effective nickel/cobalt separation step. Unfortunately, the chemical similarity of nickel and cobalt makes their separation difficult.

Similarly, the production of high purity cobalt faces the same problems as the production of high purity nickel. Therefore, there is a continuing need for a process to produce both high purity nickel and high purity cobalt.

One commercial process for recovery of nickel and cobalt from limonite ores is described in M.E. Chalkley and I.L. Toirac, "The acid pressure leach process for nickel and cobalt laterite. Part I: Review of operation at Moa" in *Hydrometallurgy and Refining of Nickel and Cobalt,* edited by W.C. Cooper and I Mihaylov, Proceedings of 27th Annual

Hydrometallurgical Meeting, The Metallurgical Society of CIM, Canada, 1997, pp. 341-353. In this process, sulfuric acid pressure leaching (SAPL) is used to solubilize nickel and cobalt as sulfate salts, while precipitating most of the contained iron as hematite. Other impurities, such as copper, manganese, magnesium, calcium, chromium, and aluminum, partially or completely dissolve. Thereafter, the nickel and cobalt must be separated from all of these impurities prior to recovery of the pure forms of nickel and cobalt. The first step in this purification process involves precipitation of the nickel and cobalt (plus copper and zinc impurities) as a mixed sulfide phase by the addition of hydrogen sulfide gas under pressure and at a slightly elevated temperature (about 120°C). This step is reasonably effective for separating nickel and cobalt from manganese, magnesium, calcium, chromium, aluminum, and iron, because the latter elements do not precipitate to any great extent. The purified, solid (Ni, Co)S is separated from the barren solution by settling and filtration. Unfortunately, the mixed sulfide needs to be redissolved and further purified prior to separation of the nickel and cobalt, and recovery of the pure metals. The redissolution and further purification is generally accomplished by releaching the mixed sulfide with water or aqueous solution of ammonia and ammonium sulfate and air or oxygen, under pressure and, in the case of water leaching, at elevated temperature (about 180-200°C). Thus, in this method, the production of a relatively pure nickel-cobalt solution from the ore requires three successive pressure metallurgy and solid/liquid separation steps that add to the complexity of the process. Moreover, the process uses hydrogen sulfide gas, a highly toxic and expensive compound, under pressure.

Because of the disadvantages of sulfide precipitation, it has been proposed to directly recover nickel and cobalt as separate pure solutions from leach liquor.

One route is by using extractants developed by Cytec Ltd., as for example described in U.S. Pat. No. 5,378,262 and 5,447,552. These Cytec extractants are organic phosphinic and thiophosphinic compounds and have high cobalt and nickel separation coefficients in sulfate systems, ranging from 5 for alkylated monothiophosphinic to >2500 for alkylated phosphinic acid. The separation coefficient (S) compares the distribution of the two metals between the aqueous and organic phase and is defined as:

$$S = D_A/D_B$$

where $D_A$ and $D_B$ are the distribution coefficients of the two metals at equilibrium. The distribution coefficient in turn is defined as:

$$D = [Concentration\ of\ metal\ in\ organic\ phase] /$$

$$[Concentration\ of\ metal\ in\ the\ aqueous\ phase]$$

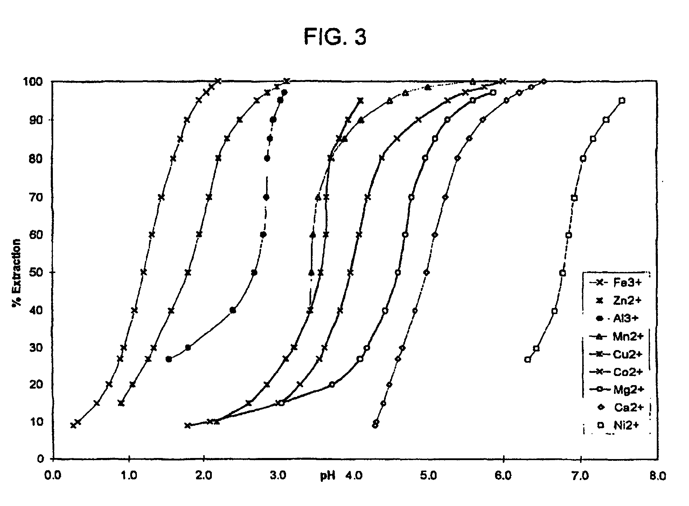

One phosphinic compound is Cyanex 272, bis(2,4,4-trimethylpentyl)phosphinic acid. The extraction characteristics of Cyanex 272 as a function of solution pH are shown in Table 2 and FIG. 3. The $pH_{50}$ value in Table 2 represents the pH at which 50% of the metal is extracted from the aqueous into the organic phase at an organic to aqueous phase ratio of 1:1.

Table 2:

| Comparison for metal extraction (0.001 M sulfate) from different Cyanex extractants (at 0.1 M in xylene) | | | | | | |
|---|---|---|---|---|---|---|
| Extractant | $pH_{50}$, $Co^{2+}$ | $pH_{50}$, $Ni^{2+}$ | $pH_{50}$, $Mn^{2+}$ | $pH_{50}$, $Cu^{2+}$ | $pH_{50}$, $Zn^{2+}$ | $pH_{50}$, $Fe^{3+}$ |
| Cyanex 272 | 5.2 | 7.05 | 3.5 | 4.6 | 3.0 | 1.6 |
| Cyanex 302 | 4.0 | 5.8 | 4.8 | <-1 | 1.8 | 1.0 |
| Cyanex 301 | 0.85 | 1.55 | N/A | <-1 | -0.4 | 0 |
| Obtained from K.C. Sole, J.B. Hiskey, *"Solvent extraction characteristics of thiosubstituted organophosphinic acid extractants"*, Hydrometallurgy, 30, pp. 345-65 (1992) and Cytec Product Information | | | | | | |

FIG. 3 (which is derived from product information available from Cytec) shows the metal extraction as a function of solution pH for various metal sulfate solutions. The distance between the curves for any two metals increases as the separation coefficient increases. Thus, nickel and cobalt can be easily separated from each other with Cyanex 272, by extracting cobalt at a pH of about 5.5, At this pH, nickel extraction is negligible and cobalt extraction is more or less complete. Unfortunately, a substantial amount of copper and manganese is also extracted at this pH. Since manganese is always present in laterite leach liquors, the cobalt strip liquor would be contaminated if the leach liquor were treated directly by solvent extraction with Cyanex 272. Magnesium and calcium may also cause problems in the solvent extraction process, if present in the feed solution, because these elements are extracted at pH values close to that at which cobalt is extracted (see FIG. 3).

The compound bis (2,4,4-trimethylpentyl) monothiophosphinic acid, commercially known as Cyanex 302, avoids the above problem, because manganese is extracted at higher pH values than cobalt, as shown in Table 2. Cyanex 302, however, may be unstable in the presence of certain impurities (such as iron) and its consumption would be uneconomically high to be practical for direct treatment of laterite leach liquors.

The compound bis (2,4,4- trimethylpentyl) dithiophosphinic acid, commercially known as Cyanex 301, also avoids the manganese problem, but this compound extracts some impurities, e.g. copper and ferric iron, almost irreversibly, resulting in poisoning of the extractant. Copper is almost always present in laterite leach liquors and can be removed by other means prior to treatment with Cyanex 301. Nevertheless, if there were an upset in the copper removal process, the subsequent Cyanex 301 processing circuit could be irreversibly contaminated with copper.

Another proposed process for extracting nickel and cobalt from limonite ores uses the above-described sulfuric acid pressure leaching process (SAPL), followed by solvent extraction with Cyanex 301. This process is described in U.S. Pat. No. 5,378,262 and 5,447,552. In this process, hexavalent chromium, ferric iron and copper are first removed. The solution is then contacted with a water-immiscible organic phase containing an organic soluble dithiophosphinic acid to recover and separate nickel and/or cobalt. This patent has one important disadvantage, the extractant will not allow repeated use in the presence of iron. For example, U.S. Pat. No. 5,759,512 reports that small concentrations (20-50 mg/l) of ferric iron Fe(III) present in the aqueous feed caused significant oxidation of this extractant. Because the nickel in nickeliferous oxide ores is partially contained in iron oxides, the presence of small amounts of iron in the acid leach solution is inevitable even after precipitation of the ferric iron.

Another route for the recovery of metals from solution is through ion exchange (IX), which has been applied, for example, in the extraction of uranium. This technique is very useful for the recovery of ionic compounds into a purified and more concentrated eluate solution. One advantage of ion exchange is the ability to operate in the presence of solids, which can be flushed out of the resin with properly designed back wash steps. This is contrary to solvent extraction, where any suspended solids, such as fine clays or colloidal silica typically present in leach liquors, will cause 'crud' formation. Crud may impair the organic/aqueous phase separation, leading to high organic losses and increased entrainment of organic in the aqueous phase and aqueous in the organic phase. This entrainment may cause operating problems in the downstream recovery processes and increased reagent consumption. Other advantages of ion exchange are the ease of handling solid resin beads and the chemical stability of resins at elevated temperatures. In solvent extraction, evaporation and flammability of the organic may limit the operating temperature to typically less than 50°C. Many ion exchange resins can easily handle higher temperatures up to normal solution boiling points, which enhances the resin kinetics and metals separation. The ability to operate at higher temperature also allows immediate treatment of the process solutions, as most leach solutions have temperatures over 50°C. For example, in the case of laterite pressure leaching, the pregnant leach liquor is produced at a temperature close to the normal boiling point of the solution. Thus expensive cooling steps are not required and greater thermal efficiency is possible.

A process using only ion exchange without selective extraction is disclosed in WO 96/20291. In this process, nickel and cobalt are recovered directly from the resins.

U.S. Pat. No. 3,884,681 discloses a process to recover high purity nickel from nickeliferous mattes using resins and extractants. This process requires formation of a nickel matte and high-temperature roasting at about 900° C to first convert the nickel constituents of the ore to nickel oxide. A significant disadvantage of this process is the substantial energy, and therefore economic cost of preparing and roasting the matte. The process is also limited to the use of concentrated hydrochloric acid to dissolve nickel oxide from the matte.

It is, therefore, the object of the present invention to provide an economical process to recover substantially pure nickel and cobalt solutions from leach solutions through a combination of ion exchange and selective extraction with organic extractants, without degradation that would limit the repeated use of the organic extractant.

## SUMMARY OF THE INVENTION

A first aspect of the invention is defined in claim 1.

A second aspect of the invention is defined in claim 23.

The present invention provides a process for the selective recovery of pure nickel and cobalt solutions, suitable for electrolysis or other final recovery steps, from a feed solution. The feed solution is a sulfate feed solution, which is preferably obtained from sulfuric acid leaching of nickel and cobalt bearing laterite or oxide ore. The laterite ore may include the saprolite and/or limonite.

Broadly, the process includes the steps of providing an aqueous sulfate feed solution containing nickel, cobalt, and at least one element selected from the group consisting of manganese, magnesium, calcium, iron(II), chromium (III), chromium (VI), copper, and aluminum, contacting the feed solution with a solid ion exchange resin to form a nickel and cobalt-loaded resin and an ion exchange raffinate, eluting the nickel and cobalt from the resin to form an eluate containing a soluble nickel salt and a soluble cobalt salt, contacting the eluate with a water-immiscible organic phase containing an extractant to load cobalt onto the extractant to form a cobalt-containing organic phase and a nickel-containing raffinate, separating the cobalt-containing organic phase from the nickel-containing raffinate, and eluting the cobalt-containing organic phase with a strip solution to produce a cobalt-containing aqueous solution.

Each of the separated cobalt-containing organic phase and nickel-containing raffinate can be further treated to form a solution suitable for electrowinning or other process to recover substantially pure nickel and cobalt products. The nickel resulting from the electrowinning step meets the London Metal Exchange contract specification arid therefore, contains less than 0.15% by weight of cobalt. Similarly, the cobalt resulting from the electrowinning typically contains less than 0.1% by weight of nickel.

By using ion exchange for the primary metals (nickel and cobalt) recovery, many disadvantages of solvent extraction are overcome. These include crud formation due to the presence of solids, extra purification steps for the removal of organics from the product stream, possible degradation of the organic thiophosphinic acids, and the ability to operate at elevated temperatures.

In one embodiment, any copper and chromium(VI) are removed from the feed solution prior to contact with the ion exchange resin. In another preferred embodiment, the raffinate from the ion exchange resin is contacted with at least a second ion exchange resin.

It is noted that, unless otherwise stated, all percentages given in this specification and the appended claims refer to percentages by weight.

## BRIEF DESCRIPTION OF THE DRAWINGS

FIG. 1 is a flow sheet for the process of the present invention.

FIG. 2 is a flow sheet showing one embodiment of the process of the present invention.

FIG. 3 is a graph of percentage of extraction of an element using Cyanex 272 in a sulfate solution at varying pHs.

## DETAILED DESCRIPTION OF THE INVENTION

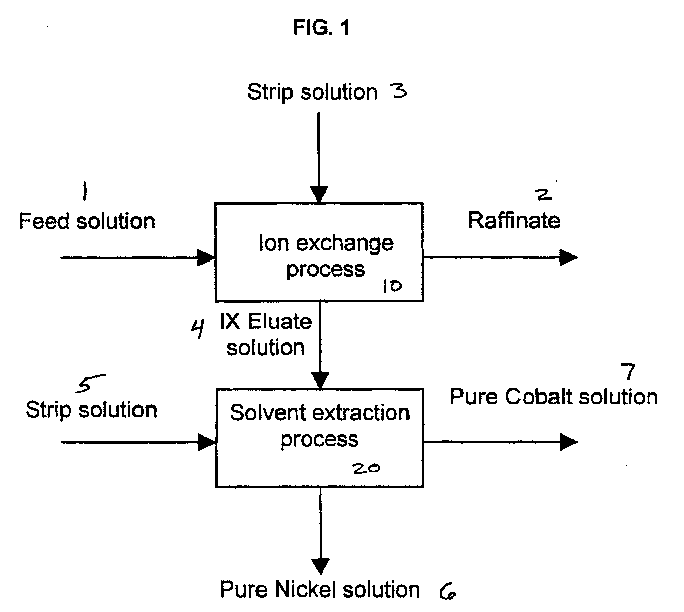

Turning now to FIG. 1, a flow sheet for the process of the present invention is shown. In general, a feed solution 1 is contacted with an ion exchange resin in ion exchanger 10 to selectively load nickel and cobalt and to form a nickel and cobalt-loaded resin and a raffinate 2 that contains most of the impurities present in the feed solution. A strip solution 3 contacts the nickel and cobalt-loaded resin to elute the nickel and cobalt from the resin and to form an ion exchange eluate solution 4 that contains a soluble nickel salt and a soluble cobalt salt, substantially purified of most of the impurity elements present in the feed solution. The eluate is then subjected to liquid/liquid extraction 20 by contacting the eluate 4 with an organic phase that contains an extractant to load cobalt onto the extractant to form a cobalt-containing organic phase and a nickel-containing raffinate. Thereafter, the cobalt-containing organic phase is separated from the nickel-containing raffinate (pure nickel solution) 6. A strip solution 5 contacts the cobalt-containing organic phase to recover a pure cobalt solution 7. Both the pure nickel solution and the pure cobalt solution may be subjected to further processes such as electrowinning to recover pure nickel and cobalt, respectively.

In the present process, the feed solution contains nickel and cobalt, as well as other elements such as aluminum, chromium, manganese, magnesium, calcium, iron, copper, and zinc. Preferably, the feed solution is derived from an ore that contains nickel and cobalt. This can be accomplished, for example, by leaching either oxide or sulfide ores with sulfuric acid or bio-leaching a sulfide ore. PCT publication WO 97/04139 describes processes that are suitable for producing suitable feed solutions. The ore may be any laterite (oxide) or sulfide ore and the laterite ore may include the saprolite and limonite. Such ores generally contain about 0.5% to about 3% nickel and about 0.005% to about 0.5% cobalt.

The feed solution may be further treated after the acid leaching such as by neutralizing with a base (e.g., limestone) as is known and conventional in the art.

The feed solution is contacted with a solid ion exchange resin to selectively extract nickel and cobalt, while rejecting manganese, magnesium, calcium, iron(II), and chromium(III), if present in the feed solution. The ion exchange resin is preferably a chelating resin that selectively absorbs nickel and cobalt. The simplified chemical reaction for the ion exchange is as follows:

$$2\underline{HR} + M^{2+} \rightarrow \underline{MR_2} + 2H^+$$

In this equation, the underlined species represent the resin and M represents any metal, preferably $Ni^{2+}$ or $Co^{2+}$.

Suitable chelating ion exchange resins include those derived from aminopyridine compounds such as the 2-picolylamines described in U.S. Pat. No. 4,098,867 and 5,141,965. A preferred chelating resin contains a functional group selected from the group consisting of 2-picolylamine, bis-(2-picolyl)amine, N-methyl-2-picoylamine, N-(2-hydroxyethyl)-2-pocolylamine, and N-(2-hydroxypropyl)-2-picoylamine, and mixtures thereof. Suitable resins include Rohm and Haas IR 904, Amberlite XE 318, Dow XFS-43084, Dow XFS-4195, and Dow XFS-4196. The Dow XFS-4196 contains N-(2-hydroxyethyl)-2-picolylamine and the XFS-43084 contains N-(2-hydroxypropyl)-2-picolylamine. A preferred chelating resin is Dow XFS-4195, manufactured by The Dow Chemical Company. It contains bis-(2-picolyl)amine as the primary chelating group.

The distribution coefficients for a variety of elements using XFS 4195 are shown in Table 3 (the values are obtained from K.C. Jones and R.R. Grinstead, *"Properties and hydrometallurgical applications of two new chelating ion exchange resins",* Chemistry and Industry, 6 August 1977, pp. 637-41).

Table 3 -

| Absorption constants for XFS 4195 in sulfate solution at pH=2 | | | | | | | | | | |
|---|---|---|---|---|---|---|---|---|---|---|
| Cu | Ni | $Fe^{3+}$ | Cd | Zn | Co | $Fe^{2+}$ | Ca | Mg | Al | Mn |
| 700 | 190 | 80 | 70 | 60 | 30 | 3 | <2 | <1 | <1 | <1 |

Nickel and cobalt can be extracted at relatively low pH (1-4), leaving all of the above-mentioned impurities in the raffinate solution. If necessary or desirable, the pH of the feed solution may be adjusted to provide for optimum selective loading of the nickel and cobalt onto the resin. Generally, the pH of the feed solution is between about 1.0 and about 5.0, preferably between about 2 and about 3.

It is also sometimes desirable to adjust the temperature of the feed solution prior to contact with the ion exchange resin to improve the kinetics of selective nickel and cobalt ion exchange. Generally, the temperature of the feed solution is between about 20°C and about 95°C, preferably between about 60°C and about 70°C.

The ion exchange process may include, but is not limited to, a single fixed bed of resin, two or more fixed beds in parallel or in series, or a plurality of resin columns that move countercurrently to the flow of the feed solution. For example, an ISEP continuous contactor manufactured by Advanced Separation Technologies, Inc. of Lakeland, Florida or a Recoflo ion exchange system made by Eco-Tec of Pickering, Ontario, Canada may be used.

It is to be understood that any arrangement of ion exchange resin suitable to selectively absorb substantially all the nickel and cobalt in the feed solution can be used. The term "substantially all" means that greater than 90% of the nickel and cobalt in the feed solution is absorbed.

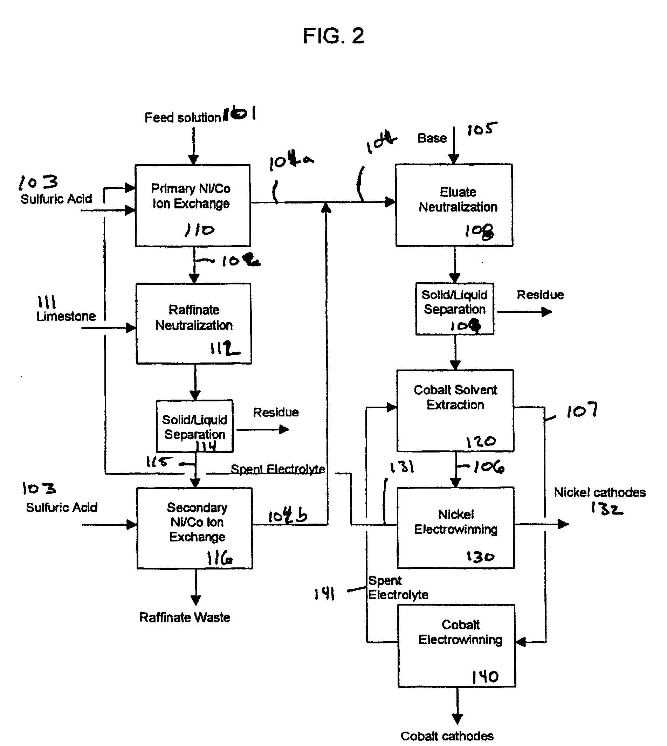

In a preferred embodiment, the ion exchange resin is provided in two steps in series. As shown in FIG. 2, the feed solution is passed through two ion exchange steps such that the raffinate of the first stage, after neutralization, forms the feed of the second stage. By using two stages, the absorption of nickel and cobalt onto the resin is enhanced, resulting in substantially complete removal of nickel and cobalt from the feed solution. It is understood that more than two steps could be used for complete nickel and cobalt removal from the feed solution.

In the preferred embodiment shown in FIG. 2, the feed solution 101 is contacted with a first ion exchanger 110, which absorbs most of the nickel and only a small portion of the cobalt. This is because the resin is selective for nickel over cobalt while the low pH generated by the replacement of the $H^+$ ions on the resin with the nickel prevents cobalt from loading.

The raffinate 102 from the first ion exchange step contains a small portion of the original nickel from the feed solution but most of the cobalt from the feed solution. The ion exchange raffinate 102 is treated with a base 111, such as limestone, in a neutralization process 112 to neutralize the acid generated by the first ion exchange step. Of course, it is to be understood that the acid may be completely or only partially neutralized. The degree of neutralization is generally determined based on the absorption constant(s) of the material(s) sought to be removed at a particular pH.

Generally, the pH is adjusted to provide a neutralized raffinate pH of about 2.0 to about 4, preferably from about 3 to about 3.5.

If necessary, the neutralized raffinate is subjected to a solid-liquid separation 114 to form a neutralized raffinate solution 115 (a feed solution to the second ion exchanger). The neutralized raffinate is then subjected to a second ion exchange step 116 to recover virtually all of the remaining cobalt and nickel.

To allow repeated use of the ion exchange resin, the feed solution desirably has low levels of chromium(VI) and copper because the chelating resins containing the 2-picolylamines as functional groups have a high affinity for copper and for chromium(VI) (but do not load or absorb chromium(III)). These elements can be removed by well-known techniques, such as chemical reduction or ion exchange. For example, the copper and chromium(VI) may be removed by a metal cementation step using iron, zinc or even nickel to reduce chromium(VI) to chromium(III) and to cement copper. Therefore, the process of the present invention contemplates the additional step of removing copper and/or chromium prior to contacting the feed solution with the ion exchange resin.

In a preferred embodiment of the invention, copper is removed from the feed solution prior to contact with the ion exchange resin. It is also recognized that if the copper concentration is very low, this removal step may not be required. Copper removal can be carried out with a number of ion exchange resins or by selective sulfide precipitation at low pH, or by any other method apparent to those skilled in the art. For example, the copper can be precipitated from the feed solution by adding to the feed solution a sulfide-containing compound selected from the group consisting of $H_2S$, NaHS, and mixtures thereof.

It has also been found convenient to use a resin with iminodiacetate functionality, for example, the resin IRC 718 manufactured by Rohm and Haas. This resin extracts copper in preference to nickel and cobalt as shown in Table 4 (the values are obtained from W.H. Waitz, Jr., "*Ion exchange in heavy metals removal and recovery*", Amber-hi-lites #162, Rohm and Haas Company, Philadelphia, PA, Fall 1979)

Table 4 -

| Absorption constants for IRC-718 relative to calcium at pH=4 | | | | | | | | | |
|------|------|------|-----|-----|-----|-----|-----------|-----|-----|
| Hg | Cu | Pb | Ni | Zn | Cd | Co | $Fe^{2+}$ | Mn | Ca |
| 2800 | 2300 | 1200 | 57 | 17 | 15 | 6.7 | 4.0 | 1.2 | 1.0 |

In another preferred embodiment of the invention, chromium(VI) is removed from the feed solution prior to contact with the ion exchange resin. It is also recognized that if the chromium(VI) concentration is very low, this removal step may not be required. The chromium(VI) can be removed by a variety of techniques. For example, chromium(VI) can be converted to chromium(III) by reduction, for example, with gaseous sulfur dioxide.

Zinc may also be present in the feed solution and the ion exchange resin will extract the zinc with the cobalt. Because the zinc is generally carried with the cobalt, it does not unduly contaminate the resulting nickel solution. If, however, it is desired to produce cobalt substantially free of zinc, it can be removed from the ion exchange eluate by solvent extraction or ion exchange, in any manner understood by those skilled in the art. For example, solvent extraction using di-2, ethyl hexyl phosphoric acid can be used. The cobalt can then be extracted from the resulting pure solution using Cyanex 272.

To recover the nickel and cobalt from the nickel and cobalt loaded resin, it is eluted with a strip solution 3 (103) to form an ion exchange eluate solution 4 (104a, 104b, 104) containing a soluble nickel salt and a soluble cobalt salt. Before eluting the nickel and cobalt, the resin may be washed with water to remove entrained raffinate solution. Where more than one ion exchanger is used, the eluate from each (104a, 104b) may be combined (104) before the solvent extraction process 20 (120).

The strip solution may be any protonated material that will selectively replace the nickel and cobalt with $H^+$ ions. The strip solution 3 (103), therefore, may be a mineral acid selected from the group consisting of sulfuric acid, hydrochloric acid, nitric acid, or other suitable acid. The choice of suitable acid depends on the subsequent nickel-cobalt separation process. Because the present invention contemplates the use of solvent extraction to separate the nickel from the cobalt, the choice of mineral acid will, in large part, be dictated by the choice of extractant. Sulfuric acid is used because the preferred extractant, Cyanex 272, exhibits large nickel-cobalt separation coefficients in the sulfate system.

In a preferred embodiment of the invention, shown in FIG. 2, the stripping solution includes at least a portion of spent electrolyte 131 from a subsequent nickel electrowinning step. If feasible, the spent electrolyte can form all or a portion of the stripping solution 131 (3). The electrowinning reaction generates one mole of sulfuric acid for each mole of nickel electrowon. Each mole of acid so generated can theoretically strip one mole of nickel and cobalt from the loaded ion exchange resin. Thus, the ion exchange process can operate in a closed circuit with the electrowinning step, allowing the spent electrolyte to contain a high concentration of nickel. This nickel is recycled to the ion exchange step and not lost.

As shown in FIG. 2, the ion exchange eluate is treated with a base 105 in a neutralization process 108 and subsequently, if necessary, separated in a solid-liquid separation 109 to leave an ion exchange eluate suitable for separation of the cobalt from the nickel.

The neutralized ion exchange eluate 4 (104) is contacted with a water-immiscible organic phase containing an extractant for the selective extraction of cobalt, leaving nickel in the raffinate 6 (106) as a substantially pure nickel solution.

One method for the separation of cobalt from nickel in chloride solutions is by solvent extraction with tri-butyl phosphate (TBP) and tri-iso-octyl amine (TIOA). Impurities such as iron, copper and manganese, however, need to be removed prior to cobalt extraction. Another method is by solvent extraction with Cyanex 301, such as described in U.

S. Pat. No. 5,378,262 and 5,447,552.

If the ion exchange resin is stripped with sulfuric acid, the extractant for the cobalt and nickel separation can be selected from phosphoric, phosphinic and thiophosphinic compounds. Preferably, the extractant is selected from the group consisting of bis(2,4,4-trimethylpentyl)phosphinic acid (Cyanex 272), bis (2,4,4-trimethylpentyl) monothiophosphinic acid (Cyanex 302), and bis(2,4,4- trimethylpentyl) dithiophosphinic acid (Cyanex 301). More preferably, the extractant is bis(2,4,4-trimethylpentyl)phosphinic acid (Cyanex 272).

The pH may be controlled at about 5 to 5.5 by addition of a base, such as NaOH solution, during the extraction to neutralize free acid liberated by cobalt extraction.

Virtually all of the cobalt can be extracted in this manner. The term "virtually all" means that greater than 99%, preferably greater than 99.8% of the cobalt can be extracted. A small portion of the nickel is also extracted, but this can be "scrubbed" off the loaded organic by contact with a strong cobalt solution, such as the product strip liquor.

Interference by manganese, magnesium, and calcium, as well as other trace impurities is virtually eliminated because of the excellent purification against these impurities afforded by the previous ion exchange process.

As shown in FIG. 1, the extraction process 20 (120) separates the nickel and cobalt into a resulting pure nickel solution 6 (106) and a cobalt-containing organic phase. The nickel containing raffinate may be further processed such as by electrowinning.

The cobalt-loaded organic solution is stripped with a strip solution 5 to recover substantially pure cobalt solution. The strip solution may be a mineral acid and can be selected from the group consisting of sulfuric acid and hydrochloric acid. The resulting pure cobalt solution 7 (107) can be further processed such as by electrowinning.

In a preferred embodiment of the above solvent extraction process, best seen in FIG. 2, the cobalt-loaded organic solution is stripped with spent electrolyte 141 from a subsequent cobalt electrowinning step 140. This spent electrolyte contains one mole of sulfuric acid for each mole of cobalt electrowon. This is the quantity of sulfuric acid required by the organic stripping reaction, thus allowing the electrowinning circuit to operate in closed circuit with the cobalt solvent extraction circuit.

As also shown in FIG. 2, the resulting pure nickel solution 106 is further processed by electrowinning 130 and recovered by nickel cathodes 132. The spent electrolyte 131, with some concentrated sulfuric acid added as make-up, is used as the ion exchange strip solution 131.

The following examples illustrate, but do not limit, the present invention. Unless otherwise indicated, all parts and percentages are by weight.

## EXAMPLE 1

This comparative example illustrates the problem of contacting the feed solution (resulting from acid leach) with an organic phase containing the extractant, Cyanex 272, which is overcome by the claimed process. Typically, after sulfuric acid pressure leaching and limestone neutralization for ferric iron removal, a laterite leach solution would contain metal sulfates, as 5-8 g/l Ni, 3-20 g/l Mg, 1-4 g/l Mn, 0.5-2.0 g/l Co and 0.2-4.0 g/l Al. Figure 3 shows that co-loading of Mn and Co will occur, because the Mn and Co extraction curves are very close to each other. Because of the high Mn to Co ratio (3:1) in laterite leach liquor, Mn will load in preference to cobalt. Therefore, Cyanex 272 is not suitable for the direct treatment of the laterite leach liquor (feed solution) to separate cobalt from other impurities in the leach liquor.

## EXAMPLE 2

This comparative example shows the co-loading of impurities with cobalt in an organic phase containing the extractant, Cyanex 272, which is overcome by the claimed process. Using an acid leach liquor, iron was oxidized with hydrogen peroxide, neutralized to pH of 5.8 to precipitate all iron, and filtered prior to the experiment. The feed solution was mixed for 5 minutes with different volumes of 15% v/v Cyanex 302 in kerosene (Philips Orfom SX12) in a baffled beaker at a total volume of 120 ml. The phases were allowed to separate after mixing and then an aqueous sample was taken. The experiment was done at room temperature, controlling the pH by the addition of 0.5N NaOH to obtain a final pH of 5.0. The composition of the feed solution and raffinate is shown in Table 5.

Table 5 -

| Aqueous concentration for Cyanex 272 shake-out test | | | | | | | | | |
|---|---|---|---|---|---|---|---|---|---|
| Solution | O:A ratio | Ca g/l | Co g/l | Mg g/l | Ni g/l | Fe g/l | Mn g/l | Zn g/l | Co/Ni sep. |
| Feed | | 0.60 | 7.45 | 0.17 | 9.23 | 0.001 | 0.086 | 0.400 | n.a. |

Table 5 -   (continued)

| Aqueous concentration for Cyanex 272 shake-out test | | | | | | | | | |
| Solution | O:A ratio | Ca g/l | Co g/l | Mg g/l | Ni g/l | Fe g/l | Mn g/l | Zn g/l | Co/Ni sep. |
|---|---|---|---|---|---|---|---|---|---|
| Raffinate | 1 | 0.55 | 1.67 | 0.16 | 9.08 | <.001 | 0.006 | <.001 | 210 |
| | 5 | 0.21 | 0.11 | 0.06 | 8.45 | <.001 | <.001 | 0.001 | 723 |
| | 10 | 0.09 | 0.04 | 0.03 | 7.88 | 0.002 | <.001 | <.001 | 1081 |

The experiment shows a good separation between cobalt and nickel, but a poor separation between manganese and cobalt. It also shows the co-loading of other impurities, such as calcium and magnesium, with the cobalt. This shows that Cyanex 272 is not suitable for the direct treatment of the laterite leach liquor to separate cobalt from other impurities in solution.

## EXAMPLE 3

This comparative example illustrates the degradation of thiophosphinic acid in the presence of iron sulfate, which is overcome by the claimed process. An aqueous cobalt/iron sulfate solution was mixed for 5 minutes with an equal volume of 10% v/v Cyanex 302 in kerosene (Philips Orfom SX12) in a baffled beaker. The phases were allowed to separate and then the organic was contacted with a fresh aliquot of the feed solution. The experiment was done at room temperature, maintaining the pH at 3.5 by the addition of 0.9N NaOH. This was repeated eight times, so that the organic was contacted nine times with the same concentration feed solution. The composition of the feed solution and raffinate is shown in Table 6.

Table 6 -

| Aqueous concentration for Cyanex 302 shake-out test | | | | |
| Solution | Contact | Co g/l | Fe g/l | $Fe^{2+}$ g/l |
|---|---|---|---|---|
| Feed | | 2.25 | 4.22 | 3.89 |
| Raffinate | 1 | 1.98 | 3.82 | 3.85 |
| | 2 | 1.83 | 3.75 | 3.64 |
| | 3 | 1.66 | 3.73 | 3.61 |
| | 4 | 1.47 | 3.49 | 3.48 |
| | 5 | 1.32 | 3.28 | 3.24 |
| | 6 | 1.16 | 3.06 | 3.00 |
| | 7 | 1.15 | 2.57 | 2.54 |
| | 8 | 1.06 | 2.17 | 2.28 |
| | 9 | 0.95 | 1.88 | 1.89 |

The data show how the iron content gradually decreased to 3.06 g/l after six contacts. In the next three contacts, there was substantial precipitate formation, while decreasing the iron content to 1.88 g/l The precipitate, thoroughly washed to remove any entrained organic, was analyzed to find elemental sulfur and phosphorous, indicating the chemical degradation of the extractant.

## EXAMPLE 4

This comparative example illustrates the instability of monothiophosphinic acid and the conversion to dithiophosphinic acid in the presence of iron sulfate in continuous multi-stage counter-current solvent extraction operation, which is overcome by the claimed process. An aqueous sulfate solution containing; 0.74 g/l iron(II), 0.08 g/l iron(III), 3.65 g/l nickel(II), 0.38 g/l cobalt(II), 1.65 magnesium(II) and 1.54 g/l manganese(II), and having a pH of 5.0 at a temperature of 23°C, was contacted in a counter-current fashion in two consecutive extraction stages at a flow-rate of 78 ml/min with a 10 vol % solution of Cyanex 302 extractant in kerosene (Philips Orfom SX12). The organic flow rate was 33 ml/min, which gives an A/O ratio of 2.4. Sodium hydroxide at 0.2 N was added to maintain the pH at 4.5. The loaded organic solution was contacted in a counter-current fashion in two consecutive scrubbing stages with a bleed stream from the cobalt eluate. The cobalt eluate flow rate was 1.5 ml/min with an aqueous recycle of 15 ml/min, to maintain an A/O ratio of 0.5. The scrubbed organic was contacted in a counter-current fashion in three consecutive stripping stages. The strip solution contained 22.5 g/l cobalt(II), 0.03 g/l iron(II), 0.04 g/l nickel(II), and 10 g/l sulfuric acid and was fed to the stripping stages at a flow-rate of 12 ml/min. After five hours, the continuous operation was stopped because of the formation of crud and poor metal loading. The composite eluate contained 27.8 g/l cobalt(II), 0.16 g/l iron(III), 2.85 g/l manganese(II), and 0.22 g/l nickel(II) at pH of 3.23. Elemental sulfur crystals were recovered from the organic storage container and the mixers/settlers. Chemical analysis by the manufacturer showed that over 90% of the original extractant, Cyanex 302, had converted to Cyanex 272. This would explain the manganese loading, because Cyanex 272 has greater affinity for manganese than cobalt.

## EXAMPLE 5

This example, according to the invention, illustrates the scavenging of copper with a chelating resin. As shown in Table 3, copper has higher affinity to XFS 4195 than nickel and cobalt. After SAPL leaching, there is copper in the leachate, though typically less than 100 mg/l. To prevent loading of this trace amount of copper on the XFS 4195 and contamination of the ion exchange eluate with copper, an ion exchange scavenging step for copper is used ahead of Ni and Co ion exchange. SAPL leachate was passed through a 200 ml IRC718 column at 60-70° C at a flow rate of 12-30 bed volumes (BV) per hour. The feed and raffinate composition is shown in Table 7.

Table 7 -

| Results for single column tests for copper scavenging with IRC718 | | pH | Cu (mg/l) |
|---|---|---|---|
| SAPL Leachate 1 | Feed solution | 1.9 | 106 |
| | Raffinate (45 BV) | n.a. | 0.8 |
| SAPL Leachate 2 | Feed solution | 1.5 | 45 |
| | Raffinate (10 BV) | n.a. | 0.0 |

## EXAMPLE 6

This example, according to the invention, describes the results from single column XFS 4195 extraction of nickel and cobalt with rejection of manganese, magnesium, calcium, aluminum, chromium, and iron(II). A synthetic laterite leach solution was prepared. The composition of this solution is typical for sulfuric acid pressure leaching, followed by limestone neutralization for iron removal and scavenging of copper with the ion exchange resin IRC718. In this experiment, the nickel and some cobalt were extracted from solution in preference to other impurities, especially manganese. A single column with 200 ml XFS 4195 resin (1 Bed Volume) was used at ambient temperature, passing the feed solution at 15 BV/hr. A total of 2.4 liters (12 Bed Volumes) of feed solution were passed through the column. A 100 g/l sulfuric acid solution was used for stripping at 6 BV/hr. A total of 1.6 liters (8 Bed Volumes) of sulfuric acid solution were used to strip the column. After collection of each bed volume, a small liquid sample was taken. At the end, all individual samples were combined for the overall raffinate or eluate bulk sample. After loading and stripping, the resin was washed with DI water. Table 8 shows the composition of feed solution, raffinate and eluate for this single-column test. The selectivity of the resin for nickel and cobalt over chromium(III), aluminum, magnesium and manganese (II) is clearly demonstrated.

Table 8 -

| Concentration profile for single-column test | | | | | | | | |
|---|---|---|---|---|---|---|---|---|
| Solution | Bed Volume | Al mg/l | Co mg/l | Cr mg/l | Fe Mg/l | Mg mg/l | Mn Mg/l | Ni mg/l |
| Feed | | 253 | 585 | 114 | 6 | 5087 | 1742 | 6532 |
| | | *Al* | *Co* | *Cr* | *Fe* | *Mg* | *Mn* | *Ni* |
| Raffinate | 1 | 0 | 0 | 0 | 0 | 11 | 3 | 16 |

Table 8 - (continued)

| Concentration profile for single-column test | | | | | | | | |
|---|---|---|---|---|---|---|---|---|
| Solution | Bed Volume | Al mg/l | Co mg/l | Cr mg/l | Fe Mg/l | Mg mg/l | Mn Mg/l | Ni mg/l |
| | 2 | 23 | 0 | 11 | 0 | 1893 | 555 | 0 |
| | 3 | 245 | 0 | 57 | 0 | 4771 | 1672 | 0 |
| | 4 | 274 | 0 | 97 | 1 | 5108 | 1840 | 0 |
| | 5 | 281 | 40 | 120 | 9 | 5034 | 1789 | 1 |
| | 6 | 285 | 777 | 130 | 7 | 5141 | 1841 | 6 |
| | 7 | 273 | 1010 | 114 | 4 | 5038 | 1801 | 32 |
| | 8 | 272 | 839 | 111 | 4 | 5013 | 1752 | 177 |
| | 9 | 266 | 728 | 108 | 3 | 4943 | 1730 | 406 |
| | 10 | 259 | 733 | 114 | 4 | 5132 | 1779 | 1000 |
| | 11 | 274 | 721 | 112 | 4 | 5128 | 1798 | 1940 |
| | 12 | 268 | 723 | 113 | 4 | 5164 | 1820 | 3318 |
| | | *Al* | *Co* | *Cr* | *Fe* | *Mg* | *Mn* | *Ni* |
| Overall Raffinate | | 227 | 464 | 91 | 3 | 4365 | 1532 | 575 |
| | | *Al* | *Co* | *Cr* | *Fe* | *Mg* | *Mn* | *Ni* |
| Eluate | 1 | 0 | 10 | 2 | 0 | 1 | 0 | 142 |
| | 2 | 0 | 34 | 2 | 0 | 0 | 0 | 5802 |
| | 3 | 0 | 65 | 3 | 4 | 0 | 0 | 26850 |
| | 4 | 0 | 14 | 1 | 0 | 0 | 0 | 15260 |
| | 5 | 0 | 0 | 0 | 0 | 0 | 0 | 3460 |
| | 6 | 0 | 0 | 0 | 0 | 0 | 0 | 1192 |
| | 7 | 0 | 0 | 0 | 0 | 0 | 0 | 429 |
| | 8 | 0 | 0 | 0 | 0 | 0 | 0 | 214 |
| | | *Al* | *Co* | *Cr* | *Fe* | *Mg* | *Mn* | *Ni* |
| Overall Eluate | | 0 | 15 | 1 | 1 | 0 | 0 | 6669 |

## EXAMPLE 7

This example, according to the invention, describes the continuous processing of neutralized laterite leach solution for the recovery and electrolytic production of cobalt and nickel. In continuous pilot plant operation, limonitic laterite was pressure leached with sulfuric acid at a throughput of 1.1 tpd, at 270°C and 0.27 ton of sulfuric acid per ton of ore, yielding about 93% nickel extraction. The autoclave discharge leach solution was neutralized with limestone, followed by liquid/solid separation in a six-stage CCD circuit. Sodium metabisulfite was added to reduce hexavalent chromium to Cr(III). The solution was subsequently passed through an ion exchange fixed bed circuit with IRC 718 resin for copper removal. This solution was used for the extraction of nickel and cobalt in two ion exchange steps in a continuous pilot plant operation for ten days. The average composition of the feed solution and raffinate for the first ion exchange step with XFS 4195 is tabulated below:

Table 9 -

| Average feed and raffinate composition for Ni IX in mg/l | | | | | | | | | |
|---|---|---|---|---|---|---|---|---|---|
| | Al | Ca | Co | Cr | Cu | Fe | Mg | Mn | Ni | Si |
| Feed | 1214 | 577 | 514 | 140 | 2.6 | 41 | 2949 | 1955 | 5085 | 90 |
| Raffinate | 1021 | 419 | 362 | 116 | 0.0 | 19 | 2364 | 1513 | 940 | 71 |

The raffinate from the nickel ion exchange step was neutralized with limestone to a pH of 3.5 and the resulting gypsum residue was removed by filtration. The filtrate solution was subsequently passed through a second ion exchange stage with XFS 4195 to recover cobalt and remaining nickel, while rejecting the major impurities. The composition of the feed (neutralized nickel ion exchange raffinate) and final raffinate for the second ion exchange step with XFS 4195 is tabulated below:

Table 10 -

| Average feed and raffinate composition for Co IX in mg/l | | | | | | | | | |
|---|---|---|---|---|---|---|---|---|---|
| | Al | Ca | Co | Cr | Cu | Fe | Mg | Mn | Ni | Si |
| Feed | 996 | 495 | 359 | 110 | 19 | 13 | 2392 | 1466 | 975 | 78 |
| Raffinate | 785 | 411 | 7 | 82 | 0 | 11 | 1906 | 1149 | 0 | 61 |

The nickel and cobalt recoveries calculated from the composition of the final raffinate were 100% and 97.5%, respectively. Nickel electrolyte was used to strip the loaded resin from the first ion exchanger. A dilute sulfuric acid solution was used to strip the loaded resin from the second ion exchanger. The compositions are tabulated below:

Table 11 -

| Average feed and eluate composition for Ni and Co IX in mg/l | | | | | | | | | |
|---|---|---|---|---|---|---|---|---|---|
| | Al | Ca | Co | Cr | Cu | Fe | Mg | Mn | Ni | Si |
| Ni strip feed (Ni electrolyte) | 0.8 | 249 | 1.9 | 15 | 3.0 | 28 | 32 | 0.4 | 46604 | 48 |
| Ni IX eluate (first exchanger) | 42 | 240 | 231 | 52 | 52 | 64 | 30 | 0.6 | 60540 | 47 |
| Co IX eluate (second exchanger) | 12 | 3 | 1096 | 26 | 54 | 1 | 4 | 7 | 4138 | 7 |

Both eluate streams were combined and neutralized with soda ash to a pH of about 5.5. The resulting residue with hydrolyzed impurities was removed by filtration, prior to feeding to the solvent extraction circuit. The solvent extraction (SX) circuit was operated at 40°C with 10% Cyanex 272 in Philips Orfom SX11. Sodium hydroxide at 0.5 N was used for neutralization in the extraction stages. The composition of the neutralized ion exchange eluate (SX feed) and SX raffinate is tabulated below:

Table 12 -

| Average Co SX feed and raffinate composition in mg/l | | | | | | | | |
|---|---|---|---|---|---|---|---|---|
| | Al | Ca | Co | Cr | Cu | Fe | Mg | Mn | Ni |
| Feed | 1.6 | 281 | 2570 | 3.9 | 1.0 | 11.0 | 53 | 12 | 69500 |
| Raffinate | 0.0 | 273 | 2.5 | 0.0 | 0.1 | 2.0 | 35 | 0.1 | 65580 |

After the SX with Cyanex 272, a very pure nickel sulfate raffinate was produced, suitable for the production of Class I electrolytic nickel. The loaded organic was stripped with acid-fortified cobalt anolyte to obtain a substantially pure cobalt solution.

Table 13 -

| Average Co SX strip feed and eluate composition in mg/l | | | | | | | | |
|---|---|---|---|---|---|---|---|---|
| | **Al** | **Ca** | **Co** | **Cr** | **Cu** | **Fe** | **Mg** | **Mn** | **Ni** |
| Strip feed | 7.0 | 94 | 40543 | 35 | 1.0 | 240 | 49 | 73 | 846 |
| Eluate | 10.8 | 93 | 72182 | 49 | 4.1 | 120 | 48 | 79 | 1073 |

**Claims**

1. A hydrometallurgical process for the recovery of nickel and cobalt comprising the sequential steps of

    a. providing an aqueous sulfate feed solution containing nickel, cobalt, and at least one impurity selected from the group consisting of manganese, magnesium, calcium, aluminum, iron(II), chromium(III), chromium (VI), and copper ions;
    b. contacting the feed solution with a solid ion exchange resin to form a nickel and cobalt-loaded resin and an ion exchange raffinate, containing at least one impurity;
    c. eluting the nickel and cobalt from the resin to form an eluate containing a soluble nickel salt and a soluble cobalt salt;
    d. contacting the eluate with a water-immiscible organic phase containing an alkylated phosphinic acid extractant to load cobalt onto the extractant to form a cobalt-containing organic phase and a nickel-containing raffinate;
    e. separating the cobalt-containing organic phase from the nickel-containing raffinate; and,
    f. eluting the cobalt-containing organic phase with a strip solution to produce a cobalt-containing aqueous solution.

2. The process of claim 1 wherein the sulfate feed solution originates from sulfuric acid leaching of a laterite or oxide ore wherein the ore contains cobalt and nickel.

3. The process of claim 1 wherein the feed solution originates from sulfuric acid pressure leaching of a laterite or oxide ore wherein the ore contains cobalt and nickel.

4. The process of claim 1 wherein the feed solution originates from atmospheric leaching of a laterite or oxide ore wherein the ore contains cobalt and nickel.

5. The process of claim 1 wherein the feed solution originates from bioxidation of sulfide or mixed oxide/sulfide ore or concentrate which contains at least one of cobalt and nickel.

6. The process of claim 1 wherein the feed solution includes copper ions and wherein the process includes the additional step of removing copper ions from the feed solution prior to contacting with the ion exchange resin.

7. The process of claim 6 wherein the copper ions are removed from the feed solution by contacting the feed solution with an ion exchange resin selective to the removal of copper.

8. The process of claim 6 wherein the copper ions are precipitated from the feed solution by adding a sulfide-containing compound to the feed solution.

9. The process of claim 1 wherein the feed solution contains chromium (VI) ions and the process includes the additional step of removing chromium (VI) ions from the feed solution by reducing with a reductant prior to contacting the feed solution with the ion exchange resin.

10. The process of claim 9 wherein the reductant is selected from the group consisting of $SO_2$, $H_2SO_3$, $Na_2SO_3$, $H_2S$, iron(II), iron(0) and mixtures thereof.

11. The process of claim 1 wherein the nickel and cobalt are eluted from the nickel and cobalt loaded ion exchange resin with an acid selected from the group consisting of sulfuric, hydrochloric and nitric.

12. The process of claim 1 wherein the ion exchange resin contains a chelating group selected from the group consisting of 2-picolylamine, bis-(2-picolyl)amine, N-methyl-2-picolylamine, N-(2-hydroxyethyl)-2-picolylamine, and N-(2-hydroxypropyl)-2-picolylamine, and mixtures thereof.

13. The process of claim 1 wherein the alkylated phosphinic acid extractant is bis(2,4,4-trimethylpentyl) phosphinic acid.

14. The process of claim 1 including the additional step of electrowinning the cobalt-containing aqueous solution to recover cobalt.

15. The process of claim 14 wherein a spent electrolyte is produced and is used to strip the cobalt from the cobalt-containing organic phase.

16. The process of claim 1 including the additional step of electrowinning the nickel-containing raffinate to recover nickel.

17. The process of claim 16 wherein a spent electrolyte is produced and is used to elute the absorbed nickel and cobalt from the ion exchange resin.

18. The process of claim 1 further comprising the steps of providing the resin in a series of columns and passing the feed solution serially through these columns.

19. The process of claim 1 wherein the ion exchange raffinate is contacted with at least a second ion exchange resin to form at least a second nickel and cobalt-loaded resin and at least a second raffinate.

20. The process of claim 19 including the additional steps of eluting the nickel and cobalt from the at least second ion exchange resin to form at least a second eluate containing a soluble nickel salt and a soluble cobalt salt and combining the eluate and at least the second eluate prior to contacting with the water-immiscible organic phase.

21. The process of claim 1 wherein a pH of the eluate prior to contacting with the water-immiscible organic phase is maintained at a level between about 5 and about 5.5 by the addition of a base selected from the group consisting of sodium hydroxide, ammonium hydroxide, sodium carbonate, and mixtures thereof, or a mixture of basic nickel/cobalt carbonate, nickel/cobalt hydroxide, and mixtures thereof.

22. The process of claim 1 including the additional step of contacting the cobalt-containing organic phase with a strong cobalt solution to remove co-loaded nickel.

23. A hydrometallurgical process for the recovery of nickel and cobalt comprising the steps of

   a. providing an aqueous sulfate feed solution containing nickel, cobalt, and at least one impurity selected from the group consisting of manganese, magnesium, calcium, aluminum, iron(II), chromium(VI) and copper ions;
   b. removing any copper ions from the aqueous feed solution;
   c. contacting the feed solution with a solid ion exchange resin to form a nickel and cobalt-loaded resin and an ion exchange raffinate, containing at least one impurity;
   d. eluting the nickel and cobalt from the resin to form an eluate containing a soluble nickel salt and a soluble cobalt salt;
   e. contacting the eluate with a water-immiscible organic phase containing an extractant to load cobalt onto the extractant to form a cobalt-containing organic phase and a nickel-containing raffinate;
   f. separating the cobalt-containing organic phase from the nickel-containing raffinate; and,
   g. eluting the cobalt-containing organic phase with a strip solution to produce a cobalt-containing aqueous solution.

24. The process of claim 23 further comprising the step of reducing the chromium(VI) to chromium(III).

**Patentansprüche**

1. Hydrometallurgisches Verfahren zur Gewinnung von Nickel und Cobalt, umfassend die aufeinanderfolgenden Schritte:

a. Bereitstellen einer wässrigen Sulfatbeschickungslösung, enthaltend Nickel, Cobalt und wenigstens eine Verunreinigung, ausgewählt aus der Gruppe bestehend aus Mangan-, Magnesium-, Calcium-, Aluminium-, Eisen(II)-, Chrom(III)-, Chrom(VI)- und Kupferionen;

b. Inkontaktbringen der Beschickungslösung mit einem festen Ionenaustauschharz, um ein mit Nickel und Cobalt beladenes Harz und ein Ionenaustauschraffinat zu bilden, das wenigstens eine Verunreinigung enthält;

c. Eluieren des Nickels und des Cobalts von dem Harz, um ein Eluat zu bilden, das ein lösliches Nickelsalz und ein lösliches Cobaltsalz enthält;

d. Inkontaktbringen des Eluats mit einer mit Wasser nicht mischbaren organischen Phase, die eine alkylierte Phosphinsäure als Extraktionsmittel enthält, um das Extraktionsmittel mit Cobalt zu beladen, um eine cobalthaltige organische Phase und ein nickelhaltiges Raffinat zu bilden;

e. Trennen der cobalthaltigen organischen Phase von dem nickelhaltigen Raffinat; und

f. Eluieren der cobalthaltigen organischen Phase mit einer Stripplösung, um eine cobalthaltige wässrige Lösung zu erzeugen.

2. Verfahren nach Anspruch 1, wobei die Sulfatbeschickungslösung von einer Schwefelsäurelaugung eines Laterit- oder Oxiderzes herrührt, wobei das Erz Cobalt und Nickel enthält.

3. Verfahren nach Anspruch 1, wobei die Beschickungslösung von einer Schwefelsäuredrucklaugung eines Laterit- oder Oxiderzes herrührt, wobei das Erz Cobalt und Nickel enthält.

4. Verfahren nach Anspruch 1, wobei die Beschickungslösung von einer atmosphärischen Laugung eines Laterit- oder Oxiderzes herrührt, wobei das Erz Cobalt und Nickel enthält.

5. Verfahren nach Anspruch 1, wobei die Beschickungslösung von der Biooxidation von Sulfid- oder gemischtem Oxid/Sulfid-Erz oder Konzentrat herrührt, welches wenigstens eines der Elemente Cobalt und Nickel enthält.

6. Verfahren nach Anspruch 1, wobei die Beschickungslösung Kupferionen umfasst und wobei das Verfahren den weiteren Schritt umfasst, dass Kupferionen aus der Beschickungslösung entfernt werden, bevor sie mit dem Ionenaustauschharz in Kontakt gebracht wird.

7. Verfahren nach Anspruch 6, wobei die Kupferionen durch Inkontaktbringen der Beschickungslösung mit einem Ionenaustauschharz, das für die Entfernung von Kupfer selektiv ist, aus der Beschickungslösung entfernt werden.

8. Verfahren nach Anspruch 6, wobei die Kupferionen durch Zugeben einer sulfidhaltigen Verbindung zu der Beschickungslösung aus der Beschickungslösung ausgefällt werden.

9. Verfahren nach Anspruch 1, wobei die Beschickungslösung Chrom(VI)-Ionen enthält und das Verfahren den weiteren Schritt umfasst, dass Chrom(VI)-Ionen durch Reduzieren mit einem Reduktionsmittel aus der Beschickungslösung entfernt werden, bevor die Beschickungslösung mit dem Ionenaustauschharz in Kontakt gebracht wird.

10. Verfahren nach Anspruch 9, wobei das Reduktionsmittel ausgewählt ist aus der Gruppe bestehend aus $SO_2$, $H_2SO_3$, $Na_2SO_3$, $H_2S$, Eisen(II), Eisen(0) und Gemischen davon.

11. Verfahren nach Anspruch 1, wobei das Nickel und das Cobalt von dem mit Nickel und Cobalt beladenen Ionenaustauschharz mit einer Säure eluiert werden, die ausgewählt ist aus der Gruppe bestehend aus Schwefelsäure, Chlorwasserstoffsäure und Salpetersäure.

12. Verfahren nach Anspruch 1, wobei das Ionenaustauschharz eine chelatbildende Gruppe enthält, die ausgewählt ist aus der Gruppe bestehend aus 2-Picolylamin, Bis-(2-picolyl)amin, N-Methyl-2-picolylamin, N-(2-Hydroxyethyl)-2-picolylamin und N-(2-Hydroxypropyl)-2-picolylamin und Gemischen davon.

13. Verfahren nach Anspruch 1, wobei es sich bei der alkylierten Phosphinsäure als Extraktionsmittel um Bis(2,4,4-trimethylpentyl)phosphinsäure handelt.

14. Verfahren nach Anspruch 1, umfassend den weiteren Schritt der elektrolytischen Extraktion der cobalthaltigen wässrigen Lösung, um Cobalt zu gewinnen.

15. Verfahren nach Anspruch 14, wobei ein verbrauchter Elektrolyt erzeugt wird und zum Strippen des Cobalts von der cobalthaltigen organischen Phase verwendet wird.

16. Verfahren nach Anspruch 1, umfassend den weiteren Schritt der elektrolytischen Extraktion des nickelhaltigen Raffinats, um Nickel zu gewinnen.

17. Verfahren nach Anspruch 16, wobei ein verbrauchter Elektrolyt erzeugt wird und zum Eluieren des absorbierten Nickels und Cobalts von dem Ionenaustauschharz verwendet wird.

18. Verfahren nach Anspruch 1, außerdem umfassend die Schritte des Bereitstellens des Harzes in einer Reihe von Säulen und des Leitens der Beschickungslösung hintereinander durch diese Säulen.

19. Verfahren nach Anspruch 1, wobei das Ionenaustauschraffinat mit wenigstens einem zweiten Ionenaustauschharz in Kontakt gebracht wird, um wenigstens ein zweites mit Nickel und Cobalt beladenes Harz und wenigstens ein zweites Raffinat zu bilden.

20. Verfahren nach Anspruch 19, umfassend die weiteren Schritte, dass das Nickel und das Cobalt von dem wenigstens zweiten Ionenaustauschharz eluiert werden, um wenigstens ein zweites Eluat zu bilden, das ein lösliches Nickelsalz und ein lösliches Cobaltsalz enthält, und dass das Eluat und wenigstens das zweite Eluat vereinigt werden, bevor sie mit der mit Wasser nicht mischbaren organischen Phase in Kontakt gebracht werden.

21. Verfahren nach Anspruch 1, wobei ein pH des Eluats vor dem Inkontaktbringen mit der mit Wasser nicht mischbaren organischen Phase auf einem Wert zwischen ungefähr 5 und ungefähr 5,5 gehalten wird durch die Zugabe einer Base, die ausgewählt ist aus der Gruppe bestehend aus Natriumhydroxid, Ammoniumhydroxid, Natriumcarbonat und Gemischen davon oder einem Gemisch aus basischem Nickel/Cobaltcarbonat, Nickel/Cobalthydroxid und Gemischen davon.

22. Verfahren nach Anspruch 1, umfassend den weiteren Schritt des Inkontaktbringens der cobalthaltigen organischen Phase mit einer konzentrierten Cobaltlösung, um ebenfalls enthaltenes bzw. mitaufgeladenes Nickel zu entfernen.

23. Hydrometallurgisches Verfahren zur Gewinnung von Nickel und Cobalt, umfassend die Schritte

a. Bereitstellen einer wässrigen Sulfatbeschickungslösung, enthaltend Nickel, Cobalt und wenigstens eine Verunreinigung, ausgewählt aus der Gruppe bestehend aus Mangan-, Magnesium-, Calcium-, Aluminium-, Eisen(II)-, Chrom(VI)- und Kupferionen;

b. Entfernen jeglicher Kupferionen aus der wässrigen Beschickungslösung;

c. Inkontaktbringen der Beschickungslösung mit einem festen Ionenaustauschharz, um ein mit Nickel und Cobalt beladenes Harz und ein Ionenaustauschraffinat zu bilden, das wenigstens eine Verunreinigung enthält;

d. Eluieren des Nickels und des Cobalts von dem Harz, um ein Eluat zu bilden, das ein lösliches Nickelsatz und ein lösliches Cobaltsalz enthält;

e. Inkontaktbringen des Eluats mit einer mit Wasser nicht mischbaren organischen Phase, die ein Extraktionsmittel enthält, um das Extraktionsmittel mit Cobalt zu beladen, um eine cobalthaltige organische Phase und ein nickelhaltiges Raffinat zu bilden;

f. Trennen der cobalthaltigen organischen Phase von dem nickelhaltigen Raffinat; und

g. Eluieren der cobalthaltigen organischen Phase mit einer Stripplösung, um eine cobalthaltige wässrige Lösung zu erzeugen.

**24.** Verfahren nach Anspruch 23, außerdem umfassend den Schritt des Reduzierens des Chrom(VI) zu Chrom(III).

**Revendications**

**1.** Procédé hydrométallurgique pour la récupération de cobalt et de nickel comprenant les étapes séquentielles consistant à

a. fournir une solution d'alimentation de sulfate aqueuse contenant du nickel, du cobalt, et au moins une impureté choisie dans le groupe constitué par les ions manganèse, magnésium, calcium, aluminium, fer (II), chrome (III), chrome (VI), et cuivre ;

b. mettre en contact la solution d'alimentation avec une résine échangeuse d'ions solide pour former une résine chargée de nickel et de cobalt et un raffinat d'échange d'ions contenant au moins une impureté ;

c. éluer le nickel et le cobalt de la résine pour former un éluat contenant un sel de nickel soluble et un sel de cobalt soluble ;

d. mettre en contact l'éluat avec une phase organique non miscible dans l'eau contenant un extractant acide phosphinique alkylé pour charger le cobalt sur l'extractant pour former une phase organique contenant du cobalt et un raffinat contenant du nickel ;

e. séparer la phase organique contenant du cobalt du raffinat contenant du nickel ; et,

f. éluer la phase organique contenant du cobalt avec une solution d'extraction pour produire une solution aqueuse contenant du cobalt.

**2.** Procédé selon la revendication 1, dans lequel la solution d'alimentation de sulfate provient du lessivage par l'acide sulfurique d'un minerai de latérite ou d'oxyde dans lequel le minerai contient du cobalt et du nickel.

**3.** Procédé selon la revendication 1, dans lequel la solution d'alimentation de sulfate provient du lessivage par pression à l'acide sulfurique d'un minerai de latérite ou d'oxyde dans lequel le minerai contient du cobalt et du nickel.

**4.** Procédé selon la revendication 1, dans lequel la solution d'alimentation provient du lessivage atmosphérique d'un minerai de latérite ou d'un oxyde dans lequel le minerai contient du cobalt et du nickel.

**5.** Procédé selon la revendication 1, dans lequel la solution d'alimentation provient de la bioxydation du minerai de sulfure ou oxyde/sulfure mixte ou d'un concentré qui contient au moins un parmi le nickel et le cobalt.

**6.** Procédé selon la revendication 1, dans lequel la solution d'alimentation comprend des ions cuivre et dans lequel le procédé comprend l'étape supplémentaire d'élimination des ions cuivre de la solution d'alimentation avant de mettre en contact avec la résine échangeuse d'ions.

**7.** Procédé selon la revendication 6, dans lequel les ions cuivre sont éliminés de la solution d'alimentation par mise en contact de la solution d'alimentation avec une résine échangeuse d'ions sélective de l'élimination du cuivre.

**8.** Procédé selon la revendication 6, dans lequel les ions cuivre sont précipités de la solution d'alimentation en ajoutant un composé contenant du sulfure à la solution d'alimentation.

**9.** Procédé selon la revendication 1, dans lequel la solution d'alimentation contient des ions chrome (VI), et le procédé comprend l'étape supplémentaire d'élimination des ions chrome (VI) de la solution d'alimentation par réduction avec un réducteur avant de mettre en contact la solution d'alimentation avec la résine échangeuse d'ions.

**10.** Procédé selon la revendication 9, dans lequel le réducteur est choisi dans le groupe constitué par $SO_2$, $H_2SO_3$, $Na_2SO_3$, $H_2S$, fer (II), fer (0), et leurs mélanges.

**11.** Procédé selon la revendication 1, dans lequel le nickel et le cobalt sont élués de la résine échangeuse d'ions chargée de nickel et de cobalt avec un acide choisi dans le groupe constitué par des acides sulfuriques, chlorhydriques et nitriques.

**12.** Procédé selon la revendication 1, dans lequel la résine échangeuse d'ions contient un groupe chélatant choisi dans le groupe constitué par la 2-picolylamine, la bis-(2-picolyl)amine, la N-méthyl-2-picolylamine, la N-(2-hydroxyéthyl)-2-picolylamine, et la N-(2-hydroxypropyl)-2-picolylamine, et leurs mélanges.

**EP 1 159 461 B1**

**13.** Procédé selon la revendication 1, dans lequel l'extractant acide phosphinique alkylé est l'acide bis(2,4,4-triméthylpentyl)phosphinique.

**14.** Procédé selon la revendication 1, comprenant l'étape supplémentaire d'extraction par voie électrolytique de la solution aqueuse contenant le cobalt pour récupérer le cobalt.

**15.** Procédé selon la revendication 14, dans lequel un électrolyte épuisé est produit et est utilisé pour retirer le cobalt de la phase organique contenant le cobalt.

**16.** Procédé selon la revendication 1, comprenant l'étape supplémentaire d'extraction par voie électrolytique du raffinat contenant le nickel pour récupérer le nickel.

**17.** Procédé selon la revendication 16, dans lequel un électrolyte épuisé est produit et est utilisé pour éluer le nickel et le cobalt absorbés de la résine échangeuse d'ions.

**18.** Procédé selon la revendication 1, comprenant en outre les étapes consistant à fournir la résine dans une série de colonnes et à passer la solution d'alimentation en série à travers ces colonnes.

**19.** Procédé selon la revendication 1, dans lequel le raffinat d'échange d'ions est mis en contact avec au moins une seconde résine échangeuse d'ions pour former au moins une seconde résine chargée de cobalt et de nickel et au moins un second raffinat.

**20.** Procédé selon la revendication 19, comprenant les étapes supplémentaires d'élution du nickel et du cobalt d'au moins la seconde résine échangeuse d'ions pour former au moins un second éluat contenant un sel de nickel soluble et un sel de cobalt soluble, et de combinaison de l'éluat et au moins du second éluat avant de mettre en contact avec la phase organique non miscible dans l'eau.

**21.** Procédé selon la revendication 1, dans lequel un pH de l'éluat avant la mise en contact avec la phase organique non miscible dans l'eau est maintenu à un niveau entre environ 5 et environ 5,5 par l'addition d'une base choisie dans le groupe constitué par l'hydroxyde de sodium, l'hydroxyde d'ammonium, le carbonate de sodium, et leurs mélanges, ou un mélange de carbonate de nickel/cobalt basique, l'hydroxyde de nickel/cobalt, et leurs mélanges.

**22.** Procédé selon la revendication 1, comprenant l'étape supplémentaire de mise en contact de la phase organique contenant du cobalt avec une solution de cobalt forte pour éliminer le nickel co-chargé.

**23.** Procédé hydrométallurgique pour la récupération de cobalt et de nickel comprenant les étapes consistant à

a. fournir une solution d'alimentation de sulfate aqueuse contenant du nickel, du cobalt, et au moins une impureté choisie dans le groupe constitué par les ions manganèse, magnésium, calcium, aluminium, fer (II), chrome (III), chrome (VI), et cuivre ;
b. éliminer tout ion cuivre de la solution d'alimentation aqueuse ;
c. mettre en contact la solution d'alimentation avec une résine échangeuse d'ions solide pour former une résine chargée de nickel et de cobalt et un raffinat d'échange d'ions, contenant au moins une impureté ;
d. éluer le nickel et le cobalt de la résine pour former un éluat contenant un sel de nickel soluble et un sel de cobalt soluble ;
e. mettre en contact l'éluat avec une phase organique non miscible dans l'eau contenant un extractant pour charger le cobalt sur l'extractant pour former une phase organique contenant du cobalt et un raffinat contenant du nickel ;
f. séparer la phase organique contenant du cobalt du raffinat contenant du nickel ; et,
g. éluer la phase organique contenant du cobalt avec une solution d'extraction pour produire une solution aqueuse contenant du cobalt.

**24.** Procédé selon la revendication 23, comprenant en outre l'étape de réduction du chrome (VI) en chrome (III).

# FIG. 1

Strip solution 3

1
Feed solution → | Ion exchange process 10 | → 2 Raffinate

4 IX Eluate solution

5
Strip solution → | Solvent extraction process 20 | → 7 Pure Cobalt solution

Pure Nickel solution 6

# FIG. 2

## FIG. 3